Europäisches Patentamt

European Patent Office

Office européen des brevets

(11) Numéro de publication: **0 358 544**
**A2**

# (12) DEMANDE DE BREVET EUROPEEN

(21) Numéro de dépôt: **89402253.2**

(51) Int. Cl.5: **B 60 R 25/10**

(22) Date de dépôt: **09.08.89**

(30) Priorité: **09.08.88 FR 8810758**

(43) Date de publication de la demande:
**14.03.90 Bulletin 90/11**

(84) Etats contractants désignés:
**AT BE CH DE ES GB GR IT LI LU NL SE**

(71) Demandeur: **Sté TEXTON**
**232 rue de Noisy le Sec**
**F-93170 Bagnolet (FR)**

(72) Inventeur: **Rolland,Michel,Maurice, Pierre**
**162 Rue de Rosny**
**F-93100 Montreuil (FR)**

**Barbotin Joel**
**56 rue Botzaris**
**FR-75019 Paris (FR)**

(74) Mandataire: **Berger, Helmut et al**
**Cabinet Z. WEINSTEIN 20, avenue de Friedland**
**F-75008 Paris (FR)**

(54) Procédé d'enclenchement automatique d'une alarme, notamment pour un véhicule automobile, et système pour sa mise en oeuvre.

(57) Le procédé concerne un système d'alarme, notamment pour véhicule automobile, pour protéger celui-ci contre des intrusions et des vols.

Selon ce procédé, on prévoit pour chaque partie ou accessoire à protéger, du véhicule, un dispositif de détection électrique d'une condition d'alarme (BE₂, BE₃, BE₄), relie ces dispositifs de détection à un dispositif d'alarme (AL) et alimente l'agencement électrique en énergie à partir d'une source d'énergie telle que la batterie du véhicule. Le procédé est caractérisé en ce que l'on conforme au moins certains dispositifs de détection pour que chaque condition d'alarme détectée occasionne une variation brusque de la consommation du courant aux bornes de la batterie, détecte ces variations à ces bornes (en BE1) et utilise les signaux électriques de telles variations brusques pour enclencher le dispositif d'alarme (AL).

EP 0 358 544 A2

## Description

### Procédé d'enclenchement automatique d'une alarme notament pour un véhicule automobile et système pour sa mise en oeuvre

L'invention concerne un procédé d'enclenchement automatique d'une alarme, notamment pour véhicule automobile pour protéger celui-ci contre des intrusions et des vols, et un système pour la mise en oeuvre de ce procédé.

On connaît déjà des procédés et systèmes destinés à ce but, qui assure l'enclenchement d'une alarme par exemple dans le cas de l'ouverture non autorisée des portes, du coffre ou du capot du véhicule, d'une brise des vitres, d'un vol d'accessoires se trouvant à l'intérieur du véhicule et analogues.

Selon la technique connue, on prévoit pour chaque partie ou accessoire à protéger, du véhicule, un dispositif de détection électrique d'une condition d'alarme, incorpore ces dispositifs dans un agencement de circuit électrique que l'on relie à un dispositif d'alarme et alimente en énergie électrique par exemple à partir de la batterie du véhicule, de façon que la détection d'une condition d'alarme déclenche le dispositif d'alarme.

Les systèmes d'alarme connus ont pour inconvénient majeur que chaque dispositif de détection est relié électriquement séparément au dispositif d'alarme, ce qui complique considérablement les travaux de mise en place de l'installation électrique du véhicule et rend celle-ci complexe et onéreuse.

La présente invention a pour but de proposer un procédé et un système d'enclenchement automatique d'une alarme qui ne présente pas les inconvénients qui viennent d'être énoncés.

Pour atteindre ce but, le procédé selon l'invention est caractérisé en ce que l'on conforme au moins certains dispositifs de détection pour que chaque condition d'alarme detectée occasionne une variation brusque de la consommation de courant aux bornes de la batterie, détecte ces variations à ces bornes et utilise les signaux électriques représentatifs de telles variations brusques pour enclencher le dispositif d'alarme.

Selon une caractéristique avantageuse de l'invention, on prévoit entre l'instant de détection d'une condition d'alarme, telle que l'ouverture de la porte avant du véhicule, et le déclenchement d'une alarme une temporisation d'une durée de temps prédéterminée permettant à la personne ayant créé la condition d'alarme d'accomplir une opération d'inhibition du dispositif d'alarme, telle que la mise de la clé de contact du véhicule.

Selon une autre caractéristique avantageuse de l'invention, lorsque dans un véhicule il y a des dispositifs de détection à déclenchement d'alarme instantané et temporisé, on donne la priorité au déclenchement temporisé.

Selon encore une autre caractéristique avantageuse de l'invention, on prévoit une inhibition d'un déclenchement d'alarme à la suite d'une détection de variations brusques de la consommation du courant aux bornes de la batterie, lorsque celles-ci sont produites par certains dispositifs notamment accessoires du véhicule tels que le moteur de ventilation, du dispositif de refroidissement du radiateur ou du turbo, des feux de détresse ou d'un poste de téléphone de bord.

Le système d'alarme à enclenchement automatique pour la mise en oeuvre du procédé selon l'invention est caractérisé en ce qu'au moins certains dispositifs détecteurs d'une condition d'alarme sont formés par des moyens produisant lors de la détection d'une condition d'alarme une variation brusque de la consommation du courant de la batterie et en ce qu'un dispositif détecteur de ces variations brusques est relié aux bornes de sortie de la batterie, le dispositif d'alarme étant sensible aux signaux de sortie du dispositif détecteur, qui sont représentatifs d'une variation brusque détectée de la consommation de courant.

Selon une caractéristique avantageuse de l'invention, le dispositif détecteur comprend un amplificateur tel qu'un amplificateur différentiel dont une première entrée est reliée directement a la borne de potentiel positif de la batterie tandis que l'autre entrée est reliée à un potentiel de référence légèrement différent du potentiel présent à ladite première entrée en suivant celui-ci, ce circuit de potentiel de référence comportant des moyens de temporisation des variations du potentiel à la première entrée.

L'invention sera mieux comprise, et d'autres buts, caractéristiques, détails et avantages de celle-ci apparaîtront plus clairement au cours de la description explicative qui va suivre faite en référence aux dessins schématiques annexés donnés uniquement à titre d'exemple illustrant un mode de réalisation de l'invention, et dans lesquels :

La figure 1 montre le schéma électrique d'un système d'alarme à enclenchement automatique.

La figure 2 montre le schéma électrique d'un agencement de mise en veille du système selon la figure 1.

La figure 3 montre un circuit de protection contre des erreurs de polarisation lors du branchement de la batterie ; et

La figure 4 montre un circuit de charge d'une batterie autonome du dispositif d'alarme dans un système selon la présente invention.

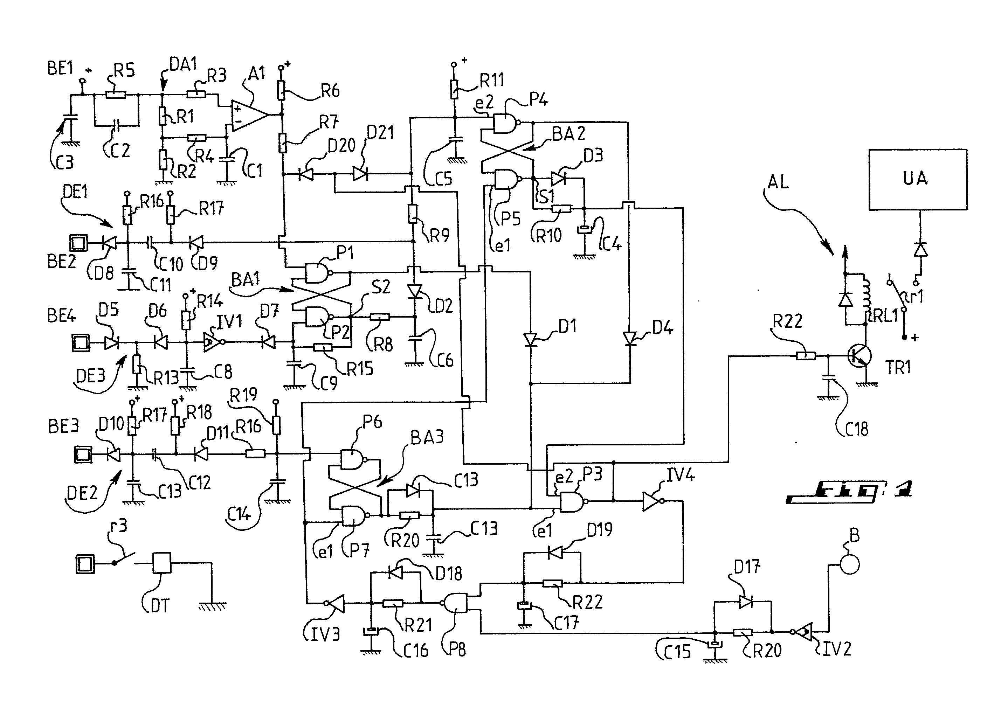

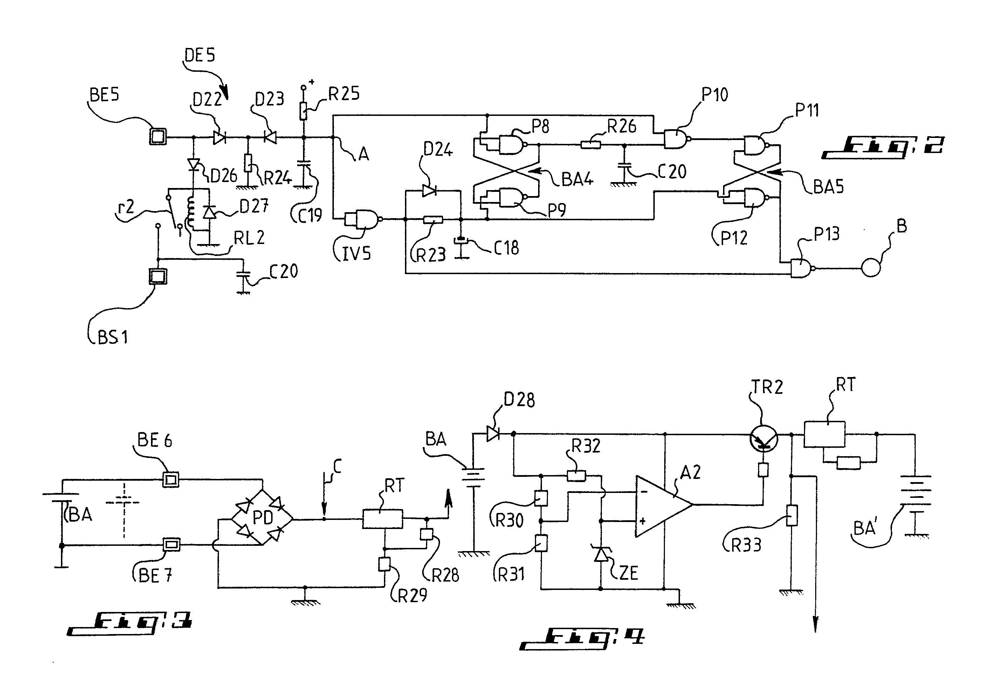

Le système d'alarme à enclenchement automatique pour véhicule automobile, dans son mode de réalisation représenté à titre d'exemple à la figure 1, comprend un détecteur DA1 de variation brusque de la consommation de courant prélevé sur la batterie, qui est relié par sa borne d'entrée BE1 à la borne de potentiel positif de la batterie (non représentée), des circuits d'entrée DE1 à DE3 dont les bornes d'entrée BE2 à BE3 sont respectivement reliées à deux dispositifs détecteurs conçus pour produire lors de la détection d'une condition d'alarme un signal de mise à la masse et un dispositif d'inhibition d'un déclenchement d'alarme. Tous ces circuits font partie d'un agencement de circuit électrique complexe qui est relié à un dispositif alarme AL représenté seulement schématiquement. Le système de circuit représenté ainsi que les dispositifs détecteurs sont alimentés en énergie électrique par la batterie du véhicule. A la figure 1, on a encore indiqué une borne B à laquelle est appliqué le signal de sortie de l'agencement de mise en veille représenté à la figure 2.

Le dispositif détecteur DA1 des variations du courant de consommation aux bornes de la batterie comprend essentiellement un amplificateur opérationnel A1 dont les entrées positive et négative sont reliées à la borne d'entrée et une borne de prise d'un diviseur de tension formé par les résistances R1 et R2, par l'intermédiaire des résistances R3, R4 ayant une même valeur. L'entrée négative est en outre reliée à la masse par un condensateur C1. L'entrée du diviseur de tension R1, R2 est reliée à la borne d'entrée BE1 du détecteur DA1, par un montage en parallèle d'une résistance R5 et d'un condensateur C2. Un condensateur C3 est interposé entre la borne BE1 et la masse. La sortie de l'amplificateur est connectée au potentiel positif d'alimentation en énergie du système par une résistance R6, d'une part, et par l'intermédiaire d'une résistance R7 à une entrée d'une bascule BA1 du type R S formée par deux portes NON-ET P1, P2. La sortie de la porte P1 est reliée à travers une diode de blocage D1 à une entrée d'une porte NON-ET dont la sortie est reliée au dispositif d'alarme AL. L'autre sortie de la bascule BA1, à savoir la sortie de la porte P2 est reliée par un montage en série formé par une résistance R8, une diode D2, une résistance R9 à une entrée d'une bascule $\bar{R}$ $\bar{S}$ BA2 également formée de deux portes NON-ET P4, P5. La sortie de la bascule BA2 formée par la sortie de la porte P5 est reliée à la deuxième entrée de la porte P3 de la commande du dispositif d'alarme AL, par l'intermédiaire d'une résistance R10. Un condensateur C4 est connecté entre la masse et la borne commune de la résistance R10 et l'entrée de la porte P3. Une diode D3 est montée en parallèle à la résistance R10, l'anode étant reliée à la sortie de la porte P5. La résistance R10 et le condensateur C4 forment un élément de temporisation. La sortie de la bascule BA2 qui est constituée par la sortie de la porte P4 et reliée par une diode de blocage D4 à l'entrée de la porte P3 auquel est reliée aussi la diode de blocage D1. Les diodes D1 et D4 sont reliées par leur cathode. Il est encore à noter que l'entrée de la bascule BA2 qui est formée par une entrée de la porte P4 est reliée, d'une part, au potentiel positif du système par une résistant R11 et, d'autre part, à la masse par un condensateur C5. Enfin la borne commune de la résistance R8 et de la diode D2 est reliée à la masse par un condensateur C6.

Le circuit DE3 qui permet d'inhiber le dispositif d'alarme à la suite de la détection d'une variation brusque du courant à la sortie de la batterie, par le dispositif détecteur DA1, est relié à l'autre entrée de la bascule BA1. A cette fin la borne d'entrée BE4 est reliée à l'entrée de la bascule par un montage en série d'une diode D5, une diode D6, un inverseur IV1 et une diode D7. Les diodes DS et D6 sont reliées par leurs cathodes qui est en outre reliée à la masse par une résistance R13. Le point commun de la diode D6 et de l'inverseur IV1 est connecté, d'une part, au potentiel positif par une résistance R14 et, d'autre part, à la masse par un condensateur C8. La diode D7 est connectée par son anode à l'entrée de bascule de la porte P2 qui est en outre reliée par un condensateur C9 à la masse et par une résistance R15 à la sortie de la porte P2.

Le circuit d'entrée DE1 relie la borne BE2 à la borne commune de la résistance R9 et de la diode D2 dans le circuit d'entrée de la bascule BA2 en provenance de l'amplificateur A1, par un agencement en série d'une diode D8, d'un condensateur C10 et d'une diode D9. La cathode de la diode D8 est mise à la borne BA2 et son anode est connectée d'une part, au potentiel positif par une résistance R16 et, d'autre part, à la masse par un condensateur C11. La borne commune du condensateur C10 et de la diode D9 est reliée au potentiel positif par une résistance R17. C'est la cathode de la diode 19 qui est connectée à la résistance R7 et le condensateur C10.

La borne d'entrée BE3 du circuit d'entrée DE2 est reliée à une entrée d'une bascule BA3 par l'intermédiaire d'un agencement en série d'une diode D10, d'un condensateur C12, d'une diode D11 et d'une résistance R16, les diodes D10 et D11 étant polarisées dans le même sens, avec la cathode reliée à la borne BE3. Le point commun de la diode D10 et du condensateur C12 est relié à la masse par un condensateur C13 et au potentiel positif par une résistance R17. Le point commun du condensateur C12 et de la diode D11 est connecté par la résistance R18 au potentiel positif. Enfin l'entrée en question de la bascule BA3 est reliée au potentiel positif et à la masse respectivement par une résistance R19 et un condensateur C14.

La deuxième entrée de la bascule BA3 est commandée par un signal en provenance du dispositif de mise en veille représenté à la figure 2 et appliqué à la borne B du système selon la figure 1. Cette borne est relié par un inverseur IV2 et une résistance R20 à une entrée d'une porte NON-ET P8 à deux entrées. Cette résistance R20 forme avec un condensateur C15 monté entre la masse et la borne commune de la résistance R20 et de la porte P8 un circuit de temporisation. Une diode D17 est montée en parallèle sur la résistance R20 avec l'anode située du côté de la porte. La sortie de cette porte P8 est reliée par une résistance R21 et un inverseur IV3 à la deuxième entrée de la bascule BA3. La borne commune de la résistance R21 et de l'inverseur IV3 est reliée par un condensateur C16 à la masse. Ce dernier et la résistance R21 forment également un circuit de temporisation. Une diode D18 est montée en parallèle à la résistance R21 avec sa diode située du côté de la sortie de la porte P8. La deuxième entrée de cette porte est reliée par l'intermédiaire d'une résistance R22 pourvue d'un condensateur C17 en vue de formation d'un circuit de temporisation et d'un inverseur IV4 à la sortie de la porte P3 de commande du dispositif d'alarme AL. Une diode D19 est en parallèle sur la résistance R22, la cathode étant reliée à l'entrée de la porte P8. Il est encore à noter que la sortie de la porte P3 est reliée aux anodes réunies de deux diodes D20, D21 reliées respectivement par leur cathode à l'entrée de la bascule BA1 qui est commandée par le dispositif détecteur DA1 et à l'entrée de commande de la bascule BA2, de la porte P4.

Le dispositif d'alarme comprend essentiellement un transistor TR1 dont la base est reliée à la sortie de la porte P3 par une résistance R22 et à la masse par un condensateur C18. Le circuit de collecteur du transistor comporte un relais RL1 dont le contact r1 est susceptible de relier l'unité d'alarme UA au potentiel positif.

En se reportant à la figure 2, on décrira ci-après le dispositif de mise en veille selon la présente invention. Sur cette figure la borne d'entrée BE5 est reliée à la serrure de la clé de contact du véhicule et présente un potentiel positif lorsque la clé est dans sa position de contact dans la serrure. Cette borne est reliée par deux diodes D22, D23 montées en série mais polarisées de façon inverse directement à une entrée d'une bascule BA4 du type $\overline{R}$ $\overline{S}$ et, par l'intermédiaire d'un élément inverseur IV5 et un circuit de temporisation formé par une résistance R23 en série et d'un condensateur C18 dont une borne est mise à la masse à la deuxième entrée de la bascule BA4. Une diode D24 est montée en parallèle sur la résistance R23, la cathode étant située du côté de la bascule. Cette dernière est formée par deux portes NON-ET P8 et P9. Concernant le circuit d'attaque de la bascule BA4, il est encore à noter que la diode D22 est reliée par son anode à la borne d'entrée BE5 et que sa cathode est encore reliée à la masse par une résistance R24. L'anode de la diode D23 est aussi reliée, d'une part, au potentiel positif par une résistance R25 et à la masse par un condensateur C19.

L'entrée de bascule de la porte P8 est reliée à une entrée d'une porte NON-ET P10 dont l'autre entrée est reliée par une résistance R26 à la sortie de la porte P8. Un condensateur C20 est monté entre cette deuxième entrée de la porte P10 et la masse. La sortie de la porte P10 est reliée à une entrée d'une bascule BA5 du type $\overline{R}$ $\overline{S}$. Cette bascule est également formée par deux portes NON-ET, à savoir les portes P11, P12. La deuxième entrée d'attaque de la bascule BA5 est reliée à l'entrée de la porte P9 qui forme une entrée d'attaque de la bascule BA4. La sortie de la bascule BA5 qui est formée par la sortie de la porte P12 est reliée à une entrée d'une porte NON-ET P13 dont l'autre entrée est connectée à la sortie de l'inverseur IV5. La sortie de la porte P13 est connectée à la borne de sortie B par laquelle l'agencement selon la figure 2 est relié au système représenté à la figure 1.

Pour compléter la description de la figure 2, il est encore à noter que la borne d'entrée BE5 est reliée par une diode D26 à un relais RL2 dont l'autre borne est mise à la masse. Ce relais commande un contact r2 qui, à l'état d'excitation du relais, relie la borne BE5 à la borne de sortie BS1 à laquelle est branchée la bobine du dispositif d'allumage du moteur du véhicule. La borne BS1 est reliée à la masse par un condensateur C20. Concernant le relais RL2, il est pourvu d'une diode D27 montée en parallèle.

On décrira ci-après le fonctionnement du système d'enclenchement automatique d'une alarme selon la présente invention, représenté aux figures 1 et 2. Les différentes étapes du procédé selon l'invention ressortiront également de cette description. Le système selon l'invention permet le déclenchement d'une alarme par la détection d'une variation brusque de la consommation du courant aux bornes de la batterie à l'aide du détecteur DA1 dont la borne d'entrée BE1 est branchée à la borne de potentiel positif de la batterie. L'enclenchement de l'alarme est temporisé, c'est-à-dire s'effectue à une durée de temps prédéterminée par exemple de 9 sec.

Ainsi l'ouverture par exemple d'une porte avant du véhicule en entraînant l'allumage du plafonnier sera détectée par le dispositif DA1, par le changement brusque de la consommation du courant qui en résulte. Cette variation occasionne à l'entrée positive de l'amplificateur A1 un changement brusque de potentiel. Or, le potentiel à l'entrée négative de l'amplificateur qui est maintenu par le diviseur de tension R1, R2 a une valeur légèrement inférieure au potentiel à l'entrée positive ne peut pas suivre cette évolution rapide à l'entrée positive en raison de la temporisation instaurée par le condensateur C1 en coopération avec les résistances dans le circuit de l'entrée négative. L'amplificateur est ainsi en mesure de produire un signal de sortie amplifié en réponse à une variation brusque même de faible valeur. Il n'apporte pas de fausse alarme, car les consommations parasites, par exemple un court-circuit partiel de la batterie donne des variations de consommation lentes qui, par un choix appropriés de la constante de temps du circuit RC à l'entrée négative de l'amplificateur, ne seront pas détectés.

Le système selon l'invention tel que représenté à la figure 1 est aussi adapté pour fonctionner avec des dispositifs détecteurs qui pourrait être reliés aux bornes d'entrée BA2 et BA3 et provoquent en réponse à la détection d'une condition d'alarme la mise à la masse du potentiel à ses entrées, par un contact approprié de mise à la masse. En étant reliée à la borne BE2, une telle mise à la masse ne provoquera le déclenchement d'une alarme seulement après une temporisation de durée prédéterminée qui sera identique dans l'exemple représenté à la temporisation de l'alarme déclenchée par le détecteur D1. La protection des portes avant du véhicule pourrait être réalisé de cette manière. Une mise à la masse par contre de la borne d'entrée BE3 déclenchera pratiquement instantanément une alarme. Le coffre à bagage, le capot et éventuellement les portes arrière pourraient être équipés des détecteurs de mise à la masse. Si la voiture était équipée d'un détecteur volumétrique à ultra-sons, celui-ci pourrait également être pourvu d'un contact de mise à la masse. Ainsi on pourrait prévoir dans le système représenté à la figure 1 un certain nombre de bornes d'entrée et de mise à la masse instantanée parallèlement à la borne BE3.

Le système selon l'invention est conçu pour organiser la coexistence des différents modes de détection et d'enclenchement, c'est-à-dire temporisé et instantané. De même l'enclenchement d'une alarme suppose une condition préalable, à savoir une mise en veille du système par l'interruption du contact dans le dispositif d'allumage du moteur à l'aide de la clé de contact. Il est bien entendu également prévu la possibilité d'inhiber le système avantageusement par la remise de la clé de contact.

La mise en veille du système qui sera expliquée plus loin en se reportant à la figure 2 se traduit à la figure 1 par un passage du potentiel à la borne B de l'état "1" à l'état "0". En effet, l'état "1" à la borne B impose l'état "0" à la porte P8. Etant du type NON-ET la sortie de cette porte sera à l'état "1" et l'inverseur IV3 imposera à l'entrée e1 des bascules BA3 et BA2 un état "0" de blocage de ces bascules. Par conséquent les deux entrées de la porte P3 de commande du dispositif d'alarme sont verrouillées à l'état "1" tandis que la sortie présente l'état "0". Dans cette condition, le transistor TR1 est bloqué et l'alarme ne peut pas être déclenchée.

Lorsque l'on coupe le contact à l'aide de la clé de contact, le système se met en veille. En effet le passage à "0" de la borne B fait passer les entrées e1 des bascules BA3 et BA2 à l'état "1", ce qui libère ces bascules.

Si dans ces conditions la borne d'entrée BE3 passe à l'état "0" à la suite d'une mise à la masse occasionnée par la détection d'une condition d'alarme, la sortie de la bascule BA3 d'abord et ensuite l'entrée e1 de la porte P3 ensuite viennent à l'état "0" ce qui fait passer la sortie de la porte P3 à "1" et rend conducteur le transistor TR1 et provoque l'excitation du relais RL1 qui, par son contact R1 occasionne l'enclenchement du dispositif d'alarme AL. Après une durée de temps déterminée par le circuit de temporisation formé par la résistance R22 et le condensateur C17 le passage à "1" de la sortie de la porte P3 impose à l'entrée correspondante de la porte P8 l'état "0", ce qui fait l'entrée e1 de la porte P3 revenir à l'état "1". L'état "0" à la sortie de cette porte, qui en résulte, arrête l'alarme. De cette manière l'alarme peut être limitée à une durée de temps souhaitée. Il est à noter que l'enclenchement de l'alarme après la mise à la masse est presque mais pas tout à fait instantané en raison d'une faible temporisation produite par la résistance R20 et le condensateur C13 à la sortie de la bascule BA3. La temporisation ainsi instaurée est très faible par exemple de l'ordre de 0,3 sec. La raison de cette temporisation sera expliquée plus loin.

Lorsque le détecteur DA1 détecte une variation brusque de la consommation du courant, la sortie de l'amplificateur A1 passe à l'état "0" ce qui occasionne le basculement BA1 dont la sortie S2 passe à "0" et impose l'état "0" à l'entrée e2 de la porte P4 et ainsi de la bascule BA2. La sortie de cette porte devient alors "1" ce qui fait passer la sortie de la porte P5 à "0" étant donné que les deux entrées de cette dernière sont maintenant à l'état "1". Après la durée de temporisation de par exemple 9 sec. déterminée par la résistance R10 et le condensateur C4, l'entrée e2 de la porte P3 devient "0" ce qui fait passer la sortie de cette porte à "1" et déclenche le dispositif d'alarme pendant la durée déterminée par la résistance R22 et le condensateur C17 . La temporisation d'enclenchement permet au conducteur après l'ouverture de la porte de mettre la clé de contact et inhiber le système d'alarme. Si pendant la temporisation d'enclenchement de l'alarme par le détecteur DA1 le potentiel à la borne d'entrée DE3 de déclenchement d'alarme instantané passe à "0", le système donne quand même la priorité à l'enclenchement temporisé. En effet, l'entrée e1 de la porte P3 est verrouillé à l'état "1" à travers la diode D1 par l'état "1" à la sortie de la porte P1 de la bascule BA1.

Si par contre le dispositif détecteur DA1 détecte une anomalité à la suite d'une variation brusque de la consommation du courant de la batterie, dans un délai de temps après la détection d'une condition d'alarme devant entraîner un déclenchement instantané de l'alarme, dans un délai de temps qui est inférieur à la temporisation déterminée par la résistance R20 et le condensateur C13 à la sortie de la bascule BA3, la sortie de la porte P1 de la bascule PA1 à travers la diode D1 impose l'état "1" à l'entrée e1 de la porte P3 avant que la bascule BA3 puisse imposer l'état "0" à cette entrée. La sortie de la porte P3 sera alors déterminée par l'entrée e2 de cette porte, c'est-à-dire par le signal temporisé de la bascule BA2.

Si par contre la détection par le détecteur DA1 intervenait après la brève temporisation à la sortie de la bascule BA3, celle-ci pourrait faire passer la sortie de la porte P3 à l'état "1" et déclencher l'alarme, tout en verrouillant par les diodes D20 et D21 les entrées correspondantes des bascules BA1 et BA2 à l'état "1".

Concernant l'entrée BE2, la détection d'une alarme avec une mise à la masse provoque également le basculement de la bascule BA2 et le déclenchement d'une alarme après une temporisation déterminée par la résistance R10 et le condensateur C4 à la sortie de cette bascule BA2, comme dans le cas d'une détection d'une condition d'alarme par le détecteur DA1.

Le système selon la figure 1 prévoit encore la possibilité d'inhiber le déclenchement d'une alarme à la suite de la détection d'une variation brusque de la consommation du courant par le détecteur DA1. Ceci permet même après la mise en veille du système le fonctionnement de certains dispositifs ou accessoire du véhicule, par exemple du moteur du ventilateur de refroidissement du radiateur ou du refroidissement du turbo, des feux de détresse ou d'un poste de téléphone installé à bord de la voiture ou analogue. Il suffirait à cette fin de faire en sorte que la mise en service de ces appareils ou dispositifs entraîne l'application d'un état "1" à la borne BE4, ce qui imposera l'état "0" à l'entrée e2 de la bascule BA1 et bloquerait celle-ci contre toute action de l'amplificateur A.

Il est encore à noter que le système selon la figure 1 prévoit une temporisation de par exemple 45 sec. avant qu'une mise en veille du système par la clé de contact, devienne efficace. Ce retard est introduit par les deux circuits de temporisation entre la borne B et la bascule BA3. Il permet au conducteur du véhicule de quitter celui-ci avant que la mise en veille devienne efficace.

En se reportant à la figure 2 on décrira maintenant le procédé de commande et le fonctionnement de l'agencement de mise en veille suivant l'invention. Quand la clé de contact est dans sa position de contact, la borne d'entrée BE5 est à l'état "1" ce qui entraîne l'état "1" à l'entrée de l'inverseur IV5. La sortie de ce dernier étant à "0", la sortie de la porte P13 est à "1", ce qui est l'état d'inhibition du système selon la figure 1. Celui-ci est donc hors veille.

On met le système en veille en coupant le contact par actionnement de la clé de contact. Ceci fait passer le point A à l'état "0" et impose "1" à l'entrée de la porte P13, qui est reliée à la sortie de l'inverseur IV5. La bascule BA4 change d'état, tandis que la bascule BA5 reste inchangée et maintient l'autre entrée de la porte 13 à l'état "1". La sortie de cette porte et ainsi la borne de sortie B passe alors à l'état "0" qui met en veille le système selon l'invention.

L'invention permet de mettre hors veille le système par simple remise du contact à la borne BE5 pendant une courte durée de temps inférieure à une durée prédéterminée, à l'aide de la seule clé de contact. En effet, le point A repasse à l'état "1", et le potentiel "0" à la sortie de l'inverseur IV5 impose à la sortie de la porte P13 et à la borne de sortie B l'état "1" qui inhibe le système d'alarme. Si le contact est coupé avant l'expiration de la durée de temps susmentionnée, en raison de la temporisation introduite par la résistance R23 et du condensateur C18 à la sortie de l'inverseur IV5. La sortie de la porte P12 reste à l'état "1", ce qui entraîne la conservation de l'état d'inhibition "1" à la sortie B. Pour remettre ensuite l'état de veille, il convient de remettre la clé de contact et la maintenir dans sa position de contact pendant une durée supérieure à la durée de la temporisation pour que la borne de sortie B passe à nouveau à l'état "0" de mise en veille. A titre d'exemple, pour inhiber le système à l'aide de la clé il faut rétablir le contact pendant moins de 5 sec. tandis que la remise en veille se produit lorsque le contact est maintenu pendant plus de 7 sec.

Le dispositif de mise en veille selon l'invention pallie également à un inconvénient des systèmes d'alarme automatique existants actuellement. En effet dans ces systèmes un voleur peut supprimer l'alarme automatique en amenant par un fil du courant sur la bobine. Il établirait ainsi le contact qui bloque le système d'alarme. Cette possibilité d'inhibition du système d'alarme est éliminé dans le système selon l'invention, en prévoyant le relais RL2 qui isole par son contact R2 la borne BS1 de la bobine d'allumage de la borne d'entrée BE5 de l'agencement de mise en veille, tant qu'il n'y a pas de potentiel positif à cette borne d'entrée.

On décrira ci-après en se référant aux figures 3 et 4 deux mesures particulières dans le système de déclenchement automatique d'un signal d'alarme.

La figure 3 illustre une mesure simple qui supprime le risque qu'une polarisation éronnée par inversion des bornes de contact de la batterie puissent produire des effets néfastes sur le système de circuit qu'elle alimente. Sur cette figure, la batterie est désignée par BA tandis que RT indique un régulateur de tension destiné à produire la tension d'alimentation du système. R28, R29 sont des résistances qui sont associées à ce régulateur.

On comprend aisément qu'en utilisant le pont de diodes PD du type GRAETZ qui est représenté, le point C à l'entrée du régulateur RT présente toujours un potentiel positif indépendamment de la polarisation des bornes d'entrée BE6 et BE7. Pour faciliter la compréhension de cette mesure de protection contre des erreurs de polarisation, on a indiqué en traits interrompus la batterie dans une position de polarisation erronée inversée.

La figure 4 illustre une possibilité avantageuse permettant de recharger la batterie autonome BA', le cas échéant associé au dispositif d'alarme, à partir de la batterie du véhicule BA. Cette mesure constructive permet de supprimer un fil électriquement conducteur séparé pour le rechargement de la batterie autonome BA' présent dans les installations électriques actuelles du véhicule.

Le circuit représenté comporte essentiellement un amplificateur à deux entrées monté en comparateur dont l'entrée négative reçoit la tension produite par un diviseur de tension formé par les résistances R30, R31, tandis que l'entrée positive est maintenue à un potentiel de référence établie par une diode zener. Une résistance R32 relie cette entrée à la borne libre de la résistance R30 qui, de son côté, est reliée par une diode D28 à la borne positive de la batterie BA1. La sortie du comparateur est reliée à la base d'un transistor TR2 dont l'émetteur est connecté à la borne positive de la batterie BA à travers la diode D28. La batterie BA' à charger est montée dans le circuit du collecteur du transistor TR2, un régulateur de tension RT étant interposé entre le collecteur du transistor et la batterie BA'. Il est encore à noter qu'une résistance R33 est montée entre le collecteur du transistor et la masse.

On comprend aisément que le circuit de recharge de la batterie BA' est interrompue tant que le transistor est maintenu à l'état bloqué par l'amplificateur comparateur A2. Ce dernier rend conducteur le transistor TR2 lorsque le potentiel à son entrée négative dépasse la tension de la diode zener. Par conséquent, la batterie autonome BA' du dispositif d'alarme sera rechargée par la batterie BA du véhicule lorsque le potentiel positif de cette dernière dépasse un seuil de tension prédéterminé permettant ce rechargement. Ainsi on pourrait faire en sorte que la batterie BA' ne sera chargée par exemple que dans le cas où la tension à la borne de la batterie BA dépasse par exemple une valeur de 13, 2 volts. Le processus de rechargement BA' n'affecte donc nullement le fonctionnement normal du système selon l'invention. Il est encore à noter que le potentiel présente au collecteur du transistor TR2 pendant la période de chargement de la batterie BA' peut être utilisé comme signal d'inhibition du dispositif de mise en veille de l'invention. Dans la .mesure où le seuil de tension au-delà duquel le rechargement de la batterie BA' s'effectue, est la conséquence du fonctionnement de l'alternateur du moteur et donc un critère de l'état de marche du moteur, on obtient une inhibition du dispositif d'alarme lorsque le moteur tourne. Le signal d'inhibition est également utilisé pour inhiber le dispositif de télécommande comme cela est schématiquement illustré à la figure 1, à titre d'exemple. Le signal d'inhibition ouvre un contact électrique r3 monté dans le circuit d'alimentation du dispositif de télécommande DT, ce qui peut être accompli de toute manière appropriée connue.

**Revendications**

1. Procédé d'enclenchement automatique d'une alarme, notamment pour véhicule automobile, pour protéger celui-ci contre des intrusions et des vols, selon lequel on prévoit pour chaque partie ou accessoire à protéger, du véhicule, un dispositif de détection électrique d'une condition d'alarme, relie ces dispositifs de détection à un dispositif d'alarme, alimente l'agencement électrique en énergie à partir d'une source d'énergie telle que la batterie du véhicule, conforme au moins certains dispositifs de détection pour que chaque condition d'alarme détectée occasionne une variation brusque de la consommation du courant aux bornes de la batterie, détecte ces variations à ces bornes et utilise les signaux électriques de telles variations brusques pour enclencher le dispositif d'alarme, caractérisé en ce que l'on prévoit une inhibition d'un déclenchement d'alarme à la suite d'une détection de variations brusques de la consommation du courant aux bornes de la batterie, lorsque celles-ci sont produites par certains dispositifs notamment accessoires du véhicule tels que le moteur de ventilation, du dispositif de refroidissement du radiateur ou du turbo.

2. Procédé selon la revendication 1, caractérisé en ce que l'on prévoit entre l'instant de détection d'une condition d'alarme, telle que l'ouverture de la porte avant du véhicule, et le déclenchement d'une alarme, une temporisation d'une durée de temps prédéterminée permettant à la personne ayant créé la condition d'alarme d'accomplir une opération d'inhibition du dispositif d'alarme, telle que la mise de la clé de contact du véhicule.

3. Procédé selon la revendication 2, caractérisé en ce que, dans le cas d'un véhicule équipé supplémentairement de dispositifs de détection à déclenchement d'alarme instantané, on donne la priorité au déclenchement temporisé.

4. Système d'alarme à enclenchement automatique pour la mise en oeuvre du procédé selon l'une des revendications précédentes, caractérisé en ce qu'au moins certains dispositifs détecteurs d'une condition d'alarme sont formés par des moyens produisant lors de la détection d'une condition d'alarme d'une variation brusque de la consommation du courant de la batterie et en ce qu'un dispositif détecteur (BA1) de cette variation brusque est relié aux bornes de sortie de la batterie, le dispositif d'alarme (AL) étant sensible aux signaux de sortie du dispositif détecteur, qui sont représentatifs d'une variation brusque détectée de la consommation de courant.

5. Système selon la revendication 4, caractérisé en ce que le dispositif détecteur (DA1) comprend un amplificateur (A1) tel qu'un amplificateur différentiel dont une première entrée est reliée directement à un potentiel positif prélevé sur la borne positive de la batterie tandis que l'autre entrée est reliée à un potentiel de référence légèrement différent du potentiel présent à ladite première entrée en suivant celui-ci, ce circuit de potentiel de référence comportant des moyens de temporisation (R2, R4, C1) des variations du potentiel à la première entrée.

6. Système selon la revendication 5, caractérisé en ce qu'il comprend un agencement de mise en veille par coupure du contact par la clé de contact du véhicule et un dispositif d'éjection de mise en veille par rétablissement pendant une durée de temps prédéterminée du contact à l'aide de ladite clé.

7. Système selon l'une des revendications 4 à 6, caractérisé en ce qu'il comprend un dispositif d'inhibition d'alarme par application d'un potentiel d'inhibition à une borne d'entrée (BE4).

8. Système selon l'une des revendications 4 à 7, caractérisé en ce qu'il comprend un circuit de protection contre des inversions de polarité lors du branchement aux bornes de la batterie (BA1) qui comporte un pont de diodes (PD) du type pont redresseur à double alternance dont la borne de sortie (C) présente toujours la même polarité indépendamment des potentiels à ces bornes d'entrée.

9. Système selon l'une des revendications 4 à 8, caractérisé en ce qu'il comporte un dispositif de chargement d'une batterie autonome (BA') associée notamment au dispositif d'alarme (AL), qui comprend un dispositif commutateur (TR2) reliant la batterie autonome (BA') à la batterie du véhicule et un dispositif de commande de cet organe commutateur pourvu d'un élément produisant un signal de fermeture du commutateur lors du dépassement d'une tension de référence prédéterminée aux bornes de la batterie (BA).

10. Système selon la revendication 9, caractérisé en ce que le dispositif de commande comprend un comparateur (A2) dont une entrée est reliée à la borne de la batterie (BA) tandis que l'autre est reliée à un élément d'établissement d'un potentiel de référence, tel qu'une diode zener.

11. Système selon la revendication 8 ou 9, caractérisé en ce que l'état de chargement de la batterie autonome (BA') est utilisé pour produire un signal d'inhibition du dispositif d'alarme et, le cas échéant, du dispositif de télécommande.

12. Système selon l'une des revendications 8 à 12, caractérisé en ce que les dispositifs accessoires du véhicule, tel que le moteur de ventilation, le dispositif de refroidissement du radiateur ou du turbo, des feux de détresse ou un poste téléphone de bord, dont la mise en marche ne doit pas déclencher l'alarme, sont adaptés pour produire lors de leur mise en marche un signal appliqué comme potentiel d'inhibition à la borne d'entrée d'inhibition (BA4) précitée.

**Fig. 1**

Fig.2

Fig.3

Fig.4